# EUROPÄISCHE PATENTSCHRIFT

(11) **EP 3 372 470 B1**
(45) Veröffentlichungstag und Bekanntmachung des Hinweises auf die Patenterteilung: **29.07.2020**
(21) Anmeldenummer: 18160147.7
(22) Anmeldetag: 06.03.2018
(51) Int. Cl.: B61D 23/02, B60R 3/02, A61G 3/06

(54) **VORRICHTUNG ZUR ÜBERWINDUNG VON HÖHENUNTERSCHIEDEN, INSBESONDERE FÜR FAHRZEUGE DES ÖFFENTLICHEN PERSONENNAH- UND FERNVERKEHRS**
DEVICE FOR OVERCOMING HEIGHT DIFFERENCES, IN PARTICULAR FOR VEHICLES IN PUBLIC URBAN AND LONG-DISTANCE PASSENGER TRANSPORT NETWORKS
DISPOSITIF PERMETTANT DE COMBLER LES DIFFÉRENCES DE HAUTEUR, EN PARTICULIER POUR VÉHICULES DU TRAFIC À COURTE DISTANCE ET DU TRAFIC À GRANDE DISTANCE PUBLICS

(30) Priorität: 07.03.2017 DE 102017203644
(43) Veröffentlichungstag der Anmeldung: 12.09.2018
(73) Patentinhaber: Bombardier Transportation GmbH, 10785 Berlin (DE)
(72) Erfinder: Singer, Gotthard, 2000 Stockerau (AT); Fiedler, Thomas, 1220 Wien (AT)
(74) Vertreter: Patentanwälte Bressel und Partner mbB

(56) Entgegenhaltungen:
- EP-A2- 0 976 376
- JP-A- 2015 120 466
- JP-A- 2015 134 594

## Beschreibung

Die Erfindung betrifft eine Vorrichtung zur Überwindung von Höhenunterschieden, insbesondere für Fahrzeuge des öffentlichen Personennah- und Fernverkehrs.

Im öffentlichen Nah- und Fernverkehr werden Fahrzeuge eingesetzt, die den Fahrgästen unterschiedliche Einstiegshöhen bieten. Insbesondere bei Niederflurtechnologie, also bei Fahrzeugen mit niedrigen Fußbodenniveaus und damit auch niedrigen Einstiegskanten, erfordert die möglichst tief liegende Einstiegshöhe, dass der Fußboden nicht durchgehend waagerecht ausgeführt werden kann, sondern dass mittels Gefälles der Höhenunterschied zwischen der Einstiegskante und dem im Fahrzeug technisch notwendigen Fußbodenniveau überwunden wird.

Fahrgäste die nicht in ihrer Mobilität eingeschränkt sind, können direkt in das Fahrzeug vom Straßenniveau oder von einem Bahnsteig aus in das Fahrzeug einsteigen und den Höhenunterschied wie bei Stufen überwinden. Ein barrierefreier Zugang ist aber nicht in jedem Fall und nicht an jeder Haltestelle möglich.

In ihrer Mobilität eingeschränkte Fahrgäste benötigen ab bestimmten, in einschlägigen Regelwerken vorgeschriebenen Höhenunterschieden Ein- und Ausstiegshilfen, wie beispielsweise Rampen, die ihrerseits bestimmte Neigungen nicht überschreiten dürfen.

Werden jedoch längere Rampen verwendet, so sind diese unpraktisch. Ferner stellt sich das Problem der Verstaubarkeit im engen Fahrzeugeinstiegsbereich. Die Rampe muss leicht zugänglich und schnell zu bedienen sein, da dem Fahrzeugführer an den einzelnen Haltepunkten nicht unbegrenzt Zeit zur Verfügung steht.

Die DE 10 2007 022 387 A1 beschreibt eine Ein- und Ausstiegshilfe für Fahrzeuge des Personenverkehrs, insbesondere Straßenbahnen, mit einer den Fahrzeugboden und eine tiefer liegende Verkehrsfläche verbindenden, ausziehbaren und um eine horizontale Achse schwenkbaren Rampe, welche bei Nichtgebrauch unzugänglich im Fahrzeug angeordnet ist, und zwar in einer im Einstiegsbereich des Fahrzeuges unterhalb des Fahrzeugbodens befindlichen Rampenkassette, welche innen an ihren Seiten senkrecht zur Fahrzeuglängsachse in Geradführungen geführte, über die Kassettenöffnung hinaus ausziehbare Tragarme aufweist. Zwischen den Tragarmen ist ein hinteres Rampenteil um eine horizontale Drehachse schwenkbar gelagert, wobei das wagenseitige Ende des hinteren Rampenteils im ausgefahrenen Zustand im Innenraum der Rampenkassette verbleibt. Am dem Fahrzeug abgewandten Ende des hinteren Rampenteils ist mittels Scharnier ein vorderes Rampenteil angelenkt, welches in eine zum hinteren Rampenteil parallele Lage umklappbar ist, und weiter ist oberhalb der Kassettenöffnung mittels Scharnier eine Überbrückungsplatte ausklappbar angeordnet.

Die US 9 050 229 B1 schlägt eine Rampenanordnung mit einer Verbindungsoberfläche zwischen einem Fahrzeugboden und einer Ausstiegsoberfläche vor, welche zwischen einer verstauten und einer ersten ausgefahrenen Position und einer zweiten ausgefahrenen Position verstellbar ist.

Die Rampenanordnung umfasst einen Rampenabschnitt, der drehbar gelagert ist und eine Platte, welche um ein erstes Ende drehbar ist. Der Rampenabschnitt umgreift abstützend ein zweites Ende der Platte, um das zweite Ende der Platte zu erhöhen, wenn sich der Rampenabschnitt in Richtung der zweiten ausgefahrenen Position bewegt.

Ferner beschreibt die US9050229 B1 ein Verfahren zur Steuerung des Rampenabschnitts für den Schritt der Drehung des Rampenabschnitts, bis der Rampenabschnitt die Ausstiegsoberfläche berührt. Das Verfahren umfasst ferner die Schritte des Drehens des Rampenabschnitts, bis die Rampenanordnung die erste ausgefahrene Position erreicht, in der der Rampenabschnitt einen vorbestimmten Winkel zu der Tafel bildet, und das selektive Drehen des Rampenabschnitts zu der zweiten Bereitstellungsposition.

Die EP 0 976 376 A2 offenbart eine Zugangsvorrichtung, die sowohl einen Zugang mittels Stufen als auch mittels einer durch einen Rollstuhl befahrbaren Rampe ermöglicht. Dabei sind die Stufen aus der Rampe herausklappbar oder die Rampe ist als solche mit eingeklappter Stufenanordnung verschwenkbar, um z.B. den Zugang zu einem Krankentransportfahrzeug zu ermöglichen.

Die im Stand der Technik genannten Vorschläge für eine Ein- und Ausstiegsvorrichtung sind häufig zu komplex aufgebaut, benötigen zu viele Teile, sind störanfällig, teuer und aufwendig zu bedienen.

Die Aufgabe der vorliegenden Erfindung war daher die Bereitstellung einer verbesserten Einstiegshilfe, die einen oder mehrere der genannten Nachteile nicht aufweist.

Die Aufgabe wird durch eine Vorrichtung zur Überwindung von Höhenunterschieden, insbesondere für Fahrzeuge des öffentlichen Personennah- und Fernverkehrs, umfassend ein Verstaufach, einen Verstaufachboden mit einem Vorderrand, eine Klapprampe und einen Bodendeckel, welcher durch mechanische Klappbewegung von einem verstauten Zustand in einen ersten Ausklappzustand und in einen zweiten Ausklappzustand führbar ist, gelöst. Durch geeignete Anordnung beispielsweise in einem Fahrzeug liegt in dem zweiten Ausklappzustand der Vorderrand des Verstaufachbodens tiefer als der Fahrzeugboden, wodurch eine geringere Einstiegshöhe realisiert wird. Eine solche Anordnung kann durch Versenken des Verstaufachs in dem Fahrzeugboden erreicht werden. Dann liegt das Verstaufach unterhalb des zweiten Höhenniveaus. In dem vollständig ausgeklappten Zustand, d.h. dem zweiten Ausklappzustand, kann der Verstaufachboden als Rampenteil mit genutzt werden. Der Verstaufachboden kann ausgehend von dem Vorderrand, der tiefer liegt als ein Fahrzeugboden, bis zum Fahrzeugboden ansteigen. Durch die Verbindung aus Klapprampe und Verstaufachboden, als weiteres ansteigendes Teil, wird die Länge der Klapprampe insgesamt verlängert und die Neigung der gesamten Rampenfläche (Klapprampe und Verstaufachboden) verringert.

Die Erfindung betrifft eine Vorrichtung zur Überwindung von Höhenunterschieden zwischen einem ersten niedrigeren Höhenniveau und einem zweiten, höheren Höhenniveau, insbesondere beim Einstieg in Fahrzeuge oder Betreten von baulichen Einrichtungen, wobei die Vorrichtung durch mechanische Klappbewegung von einem verstauten Zustand in einen ersten Ausklappzustand, in einen zweiten Ausklappzustand und wieder zurückführbar ist, umfassend
- ein Verstaufach, aufweisend einen Verstaufachboden mit einem Vorderrand,
- eine Klapprampe und
- einen ein- oder mehrteiligen Bodendeckel,
   wobei
- die Vorrichtung dergestalt in einem Bereich des zweiten Höhenniveaus angrenzend zu einem Boden auf dem zweiten Höhenniveau anordenbar ist, oder angeordnet ist, dass der Vorderrand des Verstaufachbodens tiefer als das zweite Höhenniveau, und über dem ersten Höhenniveau, liegt,
- in dem verstauten Zustand der Bodendeckel auf dem zweiten Höhenniveau, also auf gleicher Höhe wie das zweite Höhenniveau, liegt, und die Klapprampe unterhalb des Bodendeckels in dem Verstaufach verstaut ist,
- der Bodendeckel im Fall eines einteiligen Bodendeckels an einem Seitenrand des Verstaufachs schwenkbar angelenkt ist und daher um eine erste Drehachse A schwenkbar ist, die quer zu dem Vorderrand des Verstaufachbodens ist, oder im Fall eines mehrteiligen Bodendeckels mehrere Teile des Bodendeckels an einem Seitenrand des Verstaufachs schwenkbar angelenkt sind und daher jeweils um verschiedene erste Drehachsen schwenkbar sind, die quer zu dem Vorderrand des Verstaufachbodens sind,
- die Klapprampe um eine zweite, zum Vorderrand des Verstaufachbodens parallele, oder mit dem Vorderrand bündige, Drehachse schwenkbar an dem Vorderrand des Verstaufachbodens angelenkt ist, und
- der erste Ausklappzustand im Fall des einteiligen Bodendeckels durch ein Ausklappen des Bodendeckels um die erste Drehachse einstellbar ist oder im Fall des mehrteiligen Bodendeckels durch Ausklappen des Bodendeckels um die ersten Drehachsen einstellbar ist,
- der zweite Ausklappzustand durch ein Ausklappen der Klapprampe um die zweite Drehachse einstellbar ist und
- in dem zweiten Ausklappzustand die Klapprampe auf das erste Höhenniveau auflegbar ist, sodass die Klapprampe und der Verstaufachboden zusammen eine geneigte Fläche bilden.

Dass der Bodendeckel auf dem zweiten Höhenniveau liegt bedeutet, dass die Oberfläche des Bodendeckels auf dem zweiten Höhenniveau, d.h. auf gleicher Höhe wie das zweite Höhenniveau, liegt. Das zweite Höhenniveau kann ein horizontales oder geneigtes Höhenniveau sein, also in sich unterschiedliche Höhen aufweisen. Jedenfalls ist aber die tiefste Stelle des zweiten Höhenniveaus immer noch höher als das erste Höhenniveau und es existiert zwischen erstem Höhenniveau und zweitem Höhenniveau ein Höhenversatz. Entsprechend der Gestalt des zweiten Höhenniveaus kann der Bodendeckel horizontal oder geneigt angeordnet werden, um auf dem zweiten Höhenniveau zu liegen.

Vorteilhaft an der erfindungsgemäßen Vorrichtung ist, dass der Verstaufachboden unterhalb des zweiten Höhenniveaus, z.B. des Bodens eines Fahrzeugs oder einer baulichen Einrichtung, liegen kann, wodurch sich eine Absenkung des Vorderrandes sowie ein unauffälliges Verstauen der Vorrichtung ergibt.

Der Vorderrand des Verstaufachbodens ist zu dem niedrigeren ersten Höhenniveau hin orientiert und liegt darüber. Von dem Vorderrand aus existiert ein Höhenversatz zu dem ersten Höhenniveau hin. Insbesondere grenzt der Vorderrand des Verstaufachbodens an eine Einstiegskante oder Schwelle, beispielsweise einer Tür, oder an eine Kante einer Stufe an, oder ist damit bündig.

Der Boden auf dem zweiten Höhenniveau kann ein Teil der Vorrichtung sein.

Die erfindungsgemäße Vorrichtung kann als Ein- und Ausstiegshilfe bei Fahrzeugen eingesetzt werden oder auch als Hilfe beim Betreten und Verlassen von Bauwerken oder Maschinen oder zum Be- und Entladen derselben.

Beispielsweise kann die erfindungsgemäße Vorrichtung für alle Fahrzeuge, Bauwerke oder Maschinen anwendbar sein, bei denen mittels Rampen Höhenunterschiede überwunden werden sollen, wie beispielsweise Hilfsfahrzeuge, Hebebühnen, und Andere.

Je nach Einsatz bezeichnet das erste Höhenniveau die Höhe einer Verkehrsfläche, also eine Ebene von der aus das zweite Höhenniveau überwunden werden soll. Dies kann ein Bürgersteig, ein Bahnsteig, eine Straße oder ein Weg sein.
Das zweite Höhenniveau ist beim Einsatz in einem Fahrzeug z.B. die Höhe des Fahrzeugbodens, bei einer Maschine die Höhe des Maschinenbodens und in einem Bauwerk die Höhe des (Fuß-)Bodens des Raumes, der betreten werden soll.

Bei der Bezeichnung Höhenniveau kann es sich um ein waagrechtes Höhenniveau, wie eine waagerechte Ebene, oder um ein geneigtes Höhenniveau, wie eine geneigte Fläche, beispielsweise einen geneigten Boden, handeln. Das zweite Höhenniveau kann schräg ausgestaltet sein, d.h. verschiedene einzelne, sich vorzugsweise kontinuierlich ändernde Höhen aufweisen, von denen H0 eine bestimmte Höhe ist.

Das Verstaufach kann als eine Vertiefung innerhalb eines Bodenbereiches oder einer Bodenstruktur eines Fahrzeugs oder einer baulichen Einrichtung ausgebildet sein.
Insbesondere kann das Verstaufach eine an den Boden auf dem zweiten Höhenniveau angrenzende oder von diesem Boden teilweise umgrenzte Vertiefung sein. Der Boden auf dem zweiten Höhenniveau kann die Vertiefung an drei Seiten und mit Ausnahme der Seite umgrenzen, an der sich der Vorderrand des Verstaufachbodens befindet.
In einer anderen Variante kann das Verstaufach als Gehäuse ausgebildet sein, das auch als Kassette bezeichnet wird. Das Gehäuse weist einen Boden auf, der in diesem Fall den Verstaufachboden bildet. Weiterhin kann das Gehäuse Seitenwände aufweisen. Nach oben hin ist das Gehäuse offen und wird von dem Bodendeckel verschlossen, wenn die Vorrichtung in dem verstauten Zustand ist. Das Gehäuse kann in einen Bodenbereich oder eine Bodenstruktur eines Fahrzeugs oder einer baulichen Einrichtung eingebaut oder eingelassen werden. Der Boden auf dem zweiten Höhenniveau kann das Gehäuse an drei Seiten und mit Ausnahme der Seite umgrenzen, an der sich der Vorderrand des Verstaufachbodens bzw. Gehäusebodens befindet.

Der Bodendeckel kann einteilig sein.

In einer alternativen Ausführungsform kann der Bodendeckel jedoch auch derart geteilt ausgeführt sein, dass ein Teil des geteilten Bodendeckels um die erste Drehachse auf der einen Seite schwenkbar ist und der andere Teil auf die gegenüberliegende erste Drehachse schwenkbar ist (wie eine liegende symmetrische/asymmetrische Doppelflügeltüre).

Der Verstaufachboden ist vorzugsweise geneigt, insbesondere zu dem Vorderrand hin geneigt.

Bei der geneigten Fläche, die die Klapprampe und der Verstaufachboden zusammen bilden, muss es sich nicht um eine Ebene handeln. Klapprampe und Verstaufachboden können unterschiedlich geneigt sein, sodass eine geneigte Fläche mit zwei verschiedenen Bereichen gebildet wird, die eine unterschiedliche Steigung aufweisen.

In einer Ausführungsform der erfindungsgemäßen Vorrichtung ist in dem zweiten Ausklappzustand das zweite Höhenniveau durch die Vorrichtung dergestalt mit dem ersten Höhenniveau verbindbar, dass eine Höhe (H0) des zweiten Höhenniveaus, die Höhe (H3) des Vorderrands des Verstaufachbodens und die Höhe (H4) des ersten Höhenniveaus in folgender Beziehung stehen: H0 > H3 > H4.

Das zweite Höhenniveau kann, wenn es schräg ausgestaltet ist, verschiedene einzelne, sich vorzugsweise kontinuierlich ändernde Höhen aufweisen, von denen H0 eine bestimmte Höhe ist. Oben bezeichnete Höhe H0 bezeichnet dann die Höhe des Bereiches des Höhenniveaus, der an den Hinterrand des Verstaufachbodens angrenzt.

In einer bevorzugten Ausführungsform der Erfindung läuft der Verstaufachboden in Einstiegsrichtung schräg auf die Höhe (H0) des zweiten Höhenniveaus aus.

In einer weiteren bevorzugten Ausführungsform der Erfindung ist die Klapprampe an einem Außenrand, der auf das erste Höhenniveau außerhalb des Fahrzeugs, der Maschine oder des Bauwerks auflegbar ist, abgeschrägt.

In einer Ausführungsform ist die Klapprampe derart ausgeformt, dass sie in dem verstauten Zustand den Bodendeckel aufnimmt, so dass aus der Klapprampe und dem Bodendeckel in dem verstauten Zustand eine gemeinsame, vorzugsweise plane Oberfläche gebildet wird. Diese Fläche kann höhenversatzfrei oder im Wesentlichen höhenversatzfrei zu dem zweiten Höhenniveau sein. Die Klapprampe kann eine Ausformung aufweisen, die den Bodendeckel aufnimmt, sodass die genannte gemeinsame Oberfläche gebildet wird.

Die Vorteile der Erfindung werden im Folgenden insbesondere in der Ausführungsvariante für Fahrzeuge beschrieben.

Die beschriebenen Merkmale und Vorteile sind aber auch in anderen Verwendungszwecken so oder analog realisierbar. Wenn beispielsweise von einem Fahrzeugboden die Rede ist, kann dies in analoger Weise ein Boden eines Bauwerks, einer Maschine o.ä. sein. In gleicher Weise können andere Merkmale analog abgewandelt werden.

In dieser besonderen Ausführungsform betrifft die Erfindung eine Vorrichtung zur Überwindung von Höhenunterschieden insbesondere für Fahrzeuge des öffentlichen Personennah- und Fernverkehrs, welche durch mechanische Klappbewegung von einem verstauten Zustand in einen ersten Ausklappzustand, in einen zweiten Ausklappzustand und wieder zurückführbar ist, umfassend ein Verstaufach, aufweisend einen Verstaufachboden mit einem Vorderrand, eine Klapprampe und einen Bodendeckel, wobei die Vorrichtung dergestalt im Einstiegsbereich des Fahrzeugs angrenzend zu einem Fahrzeugboden anordenbar ist, dass der Vorderrand des Verstaufachbodens tiefer als der Fahrzeugboden liegt, in dem verstauten Zustand der Bodendeckel vorzugsweise keinen Höhenversatz dem Fahrzeugboden aufweist, oder im Wesentlichen höhenversatzfrei ist, und die Klapprampe unterhalb des Bodendeckels in dem Verstaufach verstaut ist, der Bodendeckel um eine erste Drehachse schwenkbar ist, die quer zur Fahrzeuglängsachse ist, die Klapprampe um eine zweite, zur Fahrzeuglängsachse parallele Drehachse schwenkbar an dem Vorderrand des Verstaufachbodens angelenkt ist und der erste Ausklappzustand durch ein Ausklappen des Bodendeckels um die erste Drehachse einstellbar ist, der zweite Ausklappzustand durch ein Ausklappen der Klapprampe um die zweite Drehachse einstellbar ist und in dem zweiten Ausklappzustand die Klapprampe auf eine Verkehrsfläche außerhalb des Fahrzeugs auflegbar ist, sodass die Klapprampe und der Verstaufachboden zusammen eine geneigte Fläche bilden.

Begrenzungsleisten oder anderweitige Vorrichtungen oder Bauteile an einem oder mehreren angrenzenden Rändern des Bodendeckels und des Fahrzeugbodens können über eine Ebene des Fahrzeugbodens oder des Bodendeckels hinausragen. Es kann grundsätzlich der Fahrzeugboden horizontal liegend oder geneigt sein. Es kann der Bodendeckel in dem verstauten Zustand horizontal oder geneigt sein.

Der Begriff "quer" bedeutet in der vorliegenden Erfindung insbesondere "nicht parallel". In einer bevorzugten Definition hat "quer" die Bedeutung von "in 90° oder im Wesentlichen 90° (zu)"

Vorteilhaft an der erfindungsgemäßen Vorrichtung ist die Einbeziehung des Bodendeckels. Damit wird das Niveau des Vorderrands des Verstaufachbodens und damit die Einstiegskante zusätzlich abgesenkt, und ein sich im verstauten Zustand ergebender Höhenversatz zwischen Fahrzeugboden und eingeklappter Klapprampe wird vorzugsweise durch den Bodendeckel ausgeglichen, der vorzugsweise im verstauten Zustand zum angrenzenden Boden höhenversatzfrei (d.h. ohne Höhenversatz) oder im Wesentlichen höhenversatzfrei ist. Im Wesentlichen höhenversatzfrei bedeutet einen Höhenversatz von wenigen cm. Ein solcher Höhenversatz ist mobilitätseingeschränkten Personen im Sinne der aktuellen Regelwerke zumutbar. Der Begriff "Im Wesentlichen höhenversatzfrei" bzw. "im Wesentlichen kein Höhenversatz" ist an anderer Stelle spezieller definiert. Das Höhenniveau kann, wie auch an anderer Stelle ausgeführt, schräg ausgestaltet sein, d.h. verschiedene einzelne, sich vorzugsweise kontinuierlich ändernde Höhen aufweisen, von denen H0 eine bestimmte Höhe ist. Der Begriff "(im Wesentlichen) höhenversatzfrei" bedeutet in diesem Fall, dass dort (im Wesentlichen) kein Höhenversatz vorliegt, wo der Bodendeckel an den Boden angrenzt. Ausgehend von dort kann der Boden ansteigen oder abfallen, was in diesem Fall nicht als Höhenversatz zu verstehen ist.

Dadurch wird die normale Einstiegssituation nicht verändert, die nominale Einstiegshöhe bleibt bei eingeklapptem Bodendeckel für alle Fahrgäste gleich und ist auf Höhe des Fußbodenniveaus.

Es müssen ferner keine baulichen Änderungen oder Anpassungen an den Türflügeln im Einstiegsbereich vorgenommen werden, insbesondere können in allen Einstiegsbereichen, auch in jenen ohne Einstiegshilfe für mobilitätseingeschränkte Fahrgäste, gleiche Türflügel verwendet werden.

Der Einstieg für mobilitätseingeschränkte Passagiere ist komfortabel, die Rampenneigung zwischen Fahrzeugboden und Verkehrsfläche kann unter den zulässigen Grenzwerten der einschlägigen Richtlinien für Personen mit eingeschränkter Mobilität liegen oder/und das Niveau der Verkehrsfläche unter Ausnützung der maximal zulässigen Grenzwerte tiefer liegen als ohne die erfindungsgemäße Vorrichtung.

Die Herstellung eines rollstuhlgerechten Einstieges mittels der erfindungsgemäßen Vorrichtung ist schnell realisierbar. Allein die Betätigung zweier mechanischer, vorzugsweise scharnierbetätigter Bauteile, insbesondere möglich mit nur einem Handwerkszeug, z.B. einem Hakenschlüssel, führt zu einer raschen Anwendung. Dadurch werden längere Fahrtunterbrechungen, wie durch komplexere Systeme oder Hubliftsysteme, vermieden.

Störanfällige elektrisch angetriebene Systeme sind nicht notwendig. Ebenso müssen keine durch Straßenschmutz verunreinigte Bauteile berührt werden.

Die erfindungsgemäße Vorrichtung ist schnell und leicht im Fahrzeug verstaubar, ohne zusätzlichen Platz zu beanspruchen.

Alles in allem stellt die erfindungsgemäße Vorrichtung eine zeitsparende, robuste, platzsparende (sowohl innerhalb des Fahrzeuges als auch auf den außenliegenden Verkehrsflächen) und kostengünstige Ein- und Ausstiegshilfe dar, die mobilitätseingeschränkten Personen ein problemloses Betreten und Verlassen von Fahrzeugen ermöglicht.

In einer bereits erwähnten Ausführungsform ist der Bodendeckel um eine erste Drehachse an einem Seitenrand des Verstaufachs schwenkbar angelenkt.

In einer weiteren Ausführungsform zeichnet sich die erfindungsgemäße Vorrichtung dadurch aus, dass in dem zweiten Ausklappzustand der Fahrzeugboden durch die Vorrichtung dergestalt mit der Verkehrsfläche verbindbar ist, dass eine Höhe (H0) des Fahrzeugbodens, die Höhe (H3) des Vorderrands des Verstaufachbodens und die Höhe (H4) der Verkehrsfläche in folgender Beziehung stehen: H0 > H3 > H4. Wenn der Fahrzeugboden schräg ist, weist die Höhe H0 verschiedene Höhen auf bzw. kann die Höhe H0 variieren. Oben bezeichnete Höhe H0 bezeichnet dann die Höhe des Bereiches des Fahrzeugbodens, der an einen Hinterrand des Verstaufachbodens angrenzt. Obige Beziehung gilt aber auch für eine Höhe Hx in einem anderen Bereich des Fahrzeugbodens, der aufgrund einer Abschrägung tiefer liegen kann, also Hx > H3 > H4.

Durch das aufeinanderfolgende Wegklappen von verschiedenen Ebenen wird die Einstiegshöhe zum Fahrzeug sukzessive abgesenkt, so dass die Klapprampe eine bestimmte Länge oder eine bestimmte Neigung nicht überschreiten muss. Um diesen Effekt zu unterstützen, weist der Verstaufachboden vorzugsweise eine Neigung in Richtung seines Vorderrands auf, so dass für einen Fahrgast erst nach Passieren des Verstaufachbodens bei in dem zweiten Ausklappzustand aufgeklappter Ein- und Ausstiegshilfe das endgültige Höhenniveaus des Fahrzeugbodens erreicht ist.

In dieser besonderen Ausführungsform der erfindungsgemäßen Vorrichtung läuft der Verstaufachboden in Einstiegsrichtung schräg auf eine Höhe (H0) des Fahrzeugbodens aus. In dieser Variante weist der Hinterrand des Verstaufachbodens vorzugsweise keinen Höhenversatz, oder im Wesentlichen keinen Höhenversatz (insbesondere <1,5 cm, mehr bevorzugt höchstens 1 cm) zu dem angrenzenden Fahrzeugboden auf. Es kann in einer anderen Variante auch ein Höhenversatz zum Fahrzeugboden vorhanden sein, vorzugsweise von wenigen cm , vorzugsweise bis zu 20 cm, oder bis zu 15 cm, mehr bevorzugt bis zu 10 cm, noch mehr bevorzugt bis zu 5 cm, weiter bevorzugt bis zu 2 cm. Wenn der Fahrzeugboden schräg ist, weist die Höhe H0 verschiedene Höhen auf bzw. kann die Höhe H0 variieren. Oben bezeichnete Höhe bezeichnet dann die Höhe des Bereiches des Fahrzeugbodens, der an den Hinterrand des Verstaufachbodens angrenzt.

In einer weiteren Ausführungsform ist in der erfindungsgemäßen Vorrichtung die Klapprampe an einem Außenrand, der auf eine Verkehrsfläche außerhalb des Fahrzeugs auflegbar ist, abgeschrägt.

In einer bevorzugten Variante der Erfindung liegt der abgeschrägte Außenrand der Klapprampe in dem verstauten Zustand an einem schräg auslaufenden Hinterrand des Verstaufachbodens passgenau an.

Vorzugsweise ist die Schräge des Außenrands der Klapprampe und die Schräge des Hinterrands des Verstaufachbodens gleich ausgebildet. Hiermit kann ein zuvor erwähntes passgenaues Anliegen erreicht werden.

In einer anderen Ausführungsform der Erfindung ist der Bodendeckel an einem Rand, der in dem verstauten Zustand zu einem Hinterrand des Verstaufachbodens hin orientiert ist, abgeschrägt.

Eine weitere Ausführungsform weist das Merkmal auf, dass der Rand des Bodendeckels in dem verstauten Zustand an dem abgeschrägten Außenrand der Klapprampe passgenau anliegt.

Vorzugsweise ist die Schräge des Außenrands der Klapprampe und die Schräge des Randes des Bodendeckels gleich ausgebildet. Hiermit kann ein zuvor erwähntes passgenaues Anliegen erreicht werden.

In einer anderen Ausführungsform der Erfindung weist der Bodendeckel einen Bodenbelag auf.

Bevorzugt ist der Bodenbelag des Deckels aus dem gleichen Material wie der Fußbodenbelag des Fahrzeugs. Vorzugsweise weist der Bodenbelag des Deckels zu einem Fußbodenbelag des Fahrzeugs keinen oder nur geringen Höhenversatz auf, so dass die erfindungsgemäße Vorrichtung möglichst unauffällig im Fahrzeug verstaubar ist und keine Verletzungsgefahr durch eine ungleiche Bodenbeschaffenheit besteht, bzw. die Bodenbeschaffenheit und -geometrie gleich oder annähernd gleich einem Bodenaufbau ohne Rampe ist.

Der Bodendeckel kann im verstauten Zustand geneigt sein bzw. eine geneigte Oberfläche ausbilden.

In einer Ausführungsform weist der Bodendeckel im verstauten Zustand eine in Richtung eines Hinterrands des Verstaufachbodens sich verringernde Dicke auf. Bevorzugt weist dann der Bodendeckel die größte Dicke auf der Seite des Vorderrands des Verstaufachbodens auf. Die Stelle mit der geringsten Dicke kann auf Seite des Hinterrands des Verstaufachbodens vorliegen, aber dies ist nicht zwingend. Die Dicke kann sich stattdessen bis zu einer Stelle noch vor dem Hinterrand verringern und dann auch wieder ansteigen. Der Bodendeckel kann Knicke oder Biegungen aufweisen.

In einer Ausführungsform weist die Klapprampe im verstauten Zustand eine in Richtung eines Hinterrands des Verstaufachbodens sich verringernde Dicke auf. Bevorzugt weist dann die Klapprampe die größte Dicke auf der Seite des Vorderrands des Verstaufachbodens auf. Die Stelle mit der geringsten Dicke kann auf Seite des Hinterrands des Verstaufachbodens vorliegen, aber dies ist nicht zwingend. Die Dicke kann sich stattdessen bis zu einer Stelle noch vor dem Hinterrand verringern und dann auch wieder ansteigen. Die Klapprampe kann Knicke oder Biegungen aufweisen. Selbstverständlich weisen der Bodendeckel und/oder die Klapprampe bei vorangehend beschriebenen Ausführungsformen auch in anderen Klappzuständen eine sich verringernde Dicke auf. Bei obiger Beschreibung wird die Verringerung der Dicke richtungsmäßig in dem verstauten Zustand definiert und bei anderen Zuständen ist die Richtung der Verringerung der Dicke eine Andere. Wenn im zweiten Ausklappzustand die Klapprampe auf das erste Höhenniveau auflegbar oder aufgelegt ist, verringert sich die Dicke in Richtung erstes Höhenniveau.

Eine derart verringerte Dicke des Bodendeckels und/oder der Klapprampe führt vorteilhafterweise zu einer nochmals verringerten Höhe des Vorderrands des Verstaufachbodens und einer Absenkung des Einstiegsniveaus, wie anhand eines Beispiels nachfolgend noch erläutert.

In einer weiteren Ausführungsform ist die Klapprampe derart ausgeformt, dass sie in dem verstauten Zustand den Bodendeckel aufnimmt, sodass aus der Klapprampe und dem Bodendeckel in dem verstauten Zustand eine plane Oberfläche gebildet wird, die vorzugsweise keinen oder im Wesentlichen keinen Höhenversatz zu dem Fahrzeugboden aufweist.

Bevorzugt ist der Verstaufachboden mit einem rutschhemmenden Material beschichtet oder belegt oder rutschhemmend ausgebildet.

Weiter bevorzugt sind der Bodendeckel und die Klapprampe an Scharnieren schwenkbar gelagert. Dies stellt eine kostengünstige und einfach zu bedienende und zu wartende Ausführungsform dar.

Ebenfalls Gegenstand der Erfindung ist ein Fahrzeug, welches die erfindungsgemäße Vorrichtung zur Überwindung von Höhenunterschieden aufweist. Das Fahrzeug ist beispielsweise ein Fahrzeug des öffentlichen Nah- und Fernverkehrs, ein Arbeitsfahrzeug oder ein Transportfahrzeug.

Das Fahrzeug kann ein Kraftfahrzeug sein, insbesondere ein Bus, Kleintransporter oder LKW.

Das Fahrzeug kann ein Schienenfahrzeug sein, beispielsweise eine U-Bahn, eine S-Bahn, ein Nahverkehrsschienenfahrzeug oder ein Fernverkehrsschienenfahrzeug.

Das Fahrzeug kann ein Wasserfahrzeug sein, insbesondere eines zum Transport oder zur Personenbeförderung.

Bei einem Fahrzeug des öffentlichen Nah- und Fernverkehrs, insbesondere einem Bus oder Schienenfahrzeug ist die erfindungsgemäße Vorrichtung vorteilhaft zum Einstieg und Ausstieg von Fahrgästen geeignet.

Bei einem Arbeits- oder Transportfahrzeug ist die erfindungsgemäße Vorrichtung vorteilhaft zum Beladen und Entladen von Arbeits- oder Transportgut geeignet.

Das Fahrzeug kann die vorangehend in dieser Beschreibung bei der Erläuterung der erfindungsgemäßen Vorrichtung genannten Merkmale aufweisen, wie zum Beispiel Fahrzeugboden, Einstiegsbereich etc. Der Einstiegsbereich ist insbesondere ein Türbereich oder liegt hinter einem Türausschnitt.

In einem Aspekt betrifft die Erfindung auch eine bauliche Einrichtung, insbesondere eine Immobilie, welche die erfindungsgemäße Vorrichtung zur Überwindung von Höhenunterschieden aufweist.

In einem Aspekt betrifft die Erfindung auch eine Maschine, insbesondere eine bewegliche oder fahrbare Maschine, welche die erfindungsgemäße Vorrichtung zur Überwindung von Höhenunterschieden aufweist.
Weitere Vorteile und Ausgestaltungen der Erfindung ergeben sich aus der nachfolgenden Beschreibung von Ausführungsbeispielen unter Bezugnahme auf die beiliegenden Figuren. Es zeigen:
- Fig. 1:: Ansicht von schräg vorne der erfindungsgemäßen Ein- und Ausstiegshilfe in dem zweiten Ausklappzustand;
- Fig. 2:: Seitenansicht der erfindungsgemäßen Ein- und Ausstiegshilfe in verstautem Zustand;
- Fig. 3:: Seitenansicht (Schnittdarstellung) der erfindungsgemäßen Ein- und Ausstiegshilfe in verstautem Zustand im Fahrzeug;
- Fig. 4:: Ansicht von schräg vorne (4a-c) und Vorderansicht (4d-f) der erfindungsgemäßen Ein- und Ausstiegshilfe im Fahrzeug in verschiedenen Ausklappzuständen;
- Fig. 5:: Draufsicht (5a-c) und Seitenansicht (5d-f) im Schnitt der erfindungsgemäßen Ein- und Ausstiegshilfe im Fahrzeug in verschiedenen Ausklappzuständen.
- Fig. 6:: zeigt eine Ausführungsform einer Vorrichtung bei welcher der Bodendeckel und die Klapprampe im verstauten Zustand eine in Richtung eines Hinterrands des Verstaufachbodens sich verringernde Dicke aufweisen.

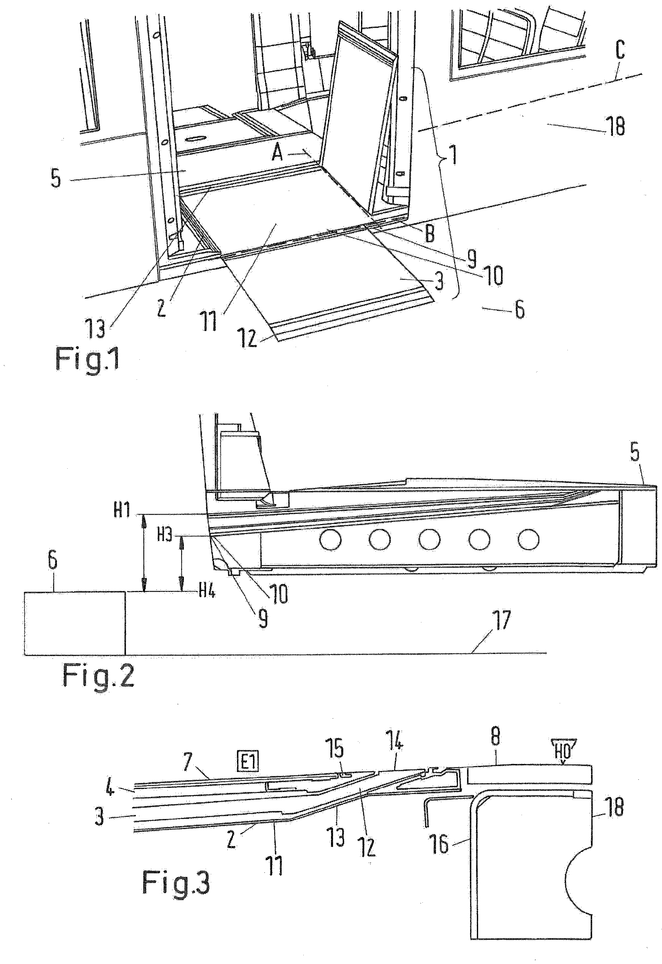

In Figur 1 ist die erfindungsgemäße Vorrichtung 1 im Fahrzeug 18 in dem zweiten Ausklappzustand gezeigt. Die Klapprampe 3 und der Verstaufachboden 11 stellen die Auffahrtsfläche für beispielsweise einen Rollstuhl dar.

Der Bodendeckel 4 ist um die erste Drehachse A, welche sich quer zur Fahrzeuglängsachse C befindet aufgeklappt.

Die Klapprampe 3 ist um die zweite Drehachse B, welche sich parallel zur Fahrzeuglängsachse C befindet, aufgeklappt.

Die Einstiegskante 9 bezeichnet die Einstiegskante der Ein- und Ausstiegshilfe in dem zweiten Ausklappzustand.

Angrenzend an die Einstiegskante 9 befindet sich der Vorderrand 10 des Verstaufachbodens 11, der hier die gleiche Höhe wie die Einstiegskante hat.

Der Verstaufachboden 11 ist in Richtung des Fahrzeugbodens 5 geneigt und läuft schräg am Hinterrand 13 des Verstaufachbodens 11 zum Fahrzeugboden 5 aus.

Der auf eine Verkehrsfläche 6 auflegbare Außenrand 12 der Klapprampe 3 ist abgeschrägt, so dass die Auffahrt für einen Rollstuhl erleichtert wird.

Figur 2 zeigt die Höhenunterschiede zwischen dem Fahrzeugboden 5 mit der Höhe H0 am Einstieg wenn die Ein- und Ausstiegshilfe verstaut ist, sich also in verstautem Zustand befindet.
Die Einstiegskante 9 weist die Höhe H3 auf. Die Verkehrsfläche 6 weist die Höhe H4 auf. Die Einstiegskante 9 bezeichnet die Einstiegskante der Ein- und Ausstiegshilfe in dem zweiten Ausklappzustand, die in Fig. 1 gezeigt ist.

Die Schienenoberkante 17 liegt unterhalb der Verkehrsfläche 6.

Der Vorderrand 10 des Verstaufachbodens 11 schließt sich direkt an die Einstiegskante 9 an.

Figur 3 zeigt den verstauten Zustand. In Figur 3 befindet sich die Klapprampe 3 unterhalb des Bodendeckels 4 in einem Verstaufach 2, welches beispielsweise als ein Stück in ein Fahrzeug 18 mittels Verkleben oder anderen gebräuchliche Methoden montiert werden kann.

Das Verstaufach 2, die Klapprampe 3 und der Bodendeckel 4 können an mindestens einer Seite abgeschrägt sein.

Der Verstaufachboden 11 dient bei ausgeklappter Rampe 3 innerhalb des Fahrzeugs 18 als Auffahrfläche für beispielsweise einen Rollstuhl.

Es ist, wie in Fig. 3 gezeigt, möglich, dass eine Auflagefläche 14 der Klapprampe 3 nicht unterhalb des Bodendeckels 4 verstaut ist, sondern ebenfalls höhenversatzfrei oder nahezu Höhenversatzfrei mit dem Bodendeckel 4 und dem Bodenbelag 7 abschließt und einen Teil des Fahrzeugbodens 5 mit dem Fußbodenbelag 8 des Fahrzeugs 18 bildet. Die Auflagefläche 14 liegt in dem zweiten Ausklappzustand auf der Verkehrsfläche 6 auf.

In dem verstauten Zustand ist ersichtlich, wie die Klapprampe 3 an einem Außenrand 12, der auf eine Verkehrsfläche außerhalb des Fahrzeugs 18 auflegbar ist, abgeschrägt ist.

Der abgeschrägte Außenrand 12 der Klapprampe 3 liegt an einem schräg auslaufenden Hinterrand 13 des Verstaufachbodens 11 passgenau an.

Die Schräge des Außenrands 12 der Klapprampe und die Schräge des Hinterrands 13 des Verstaufachbodens sind gleich ausgebildet.

Der Bodendeckel 4 ist an einem Rand 15, der in dem verstauten Zustand zu einem Hinterrand 13 des Verstaufachbodens hin orientiert ist, abgeschrägt und liegt passgenau an dem abgeschrägten Außenrand 12 der Klapprampe 3 an.

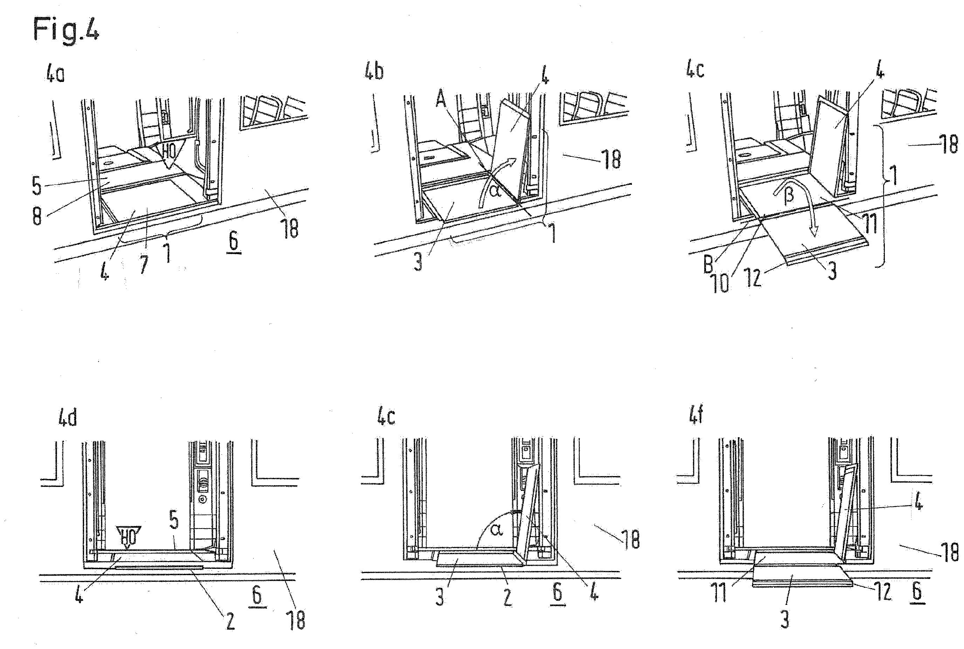

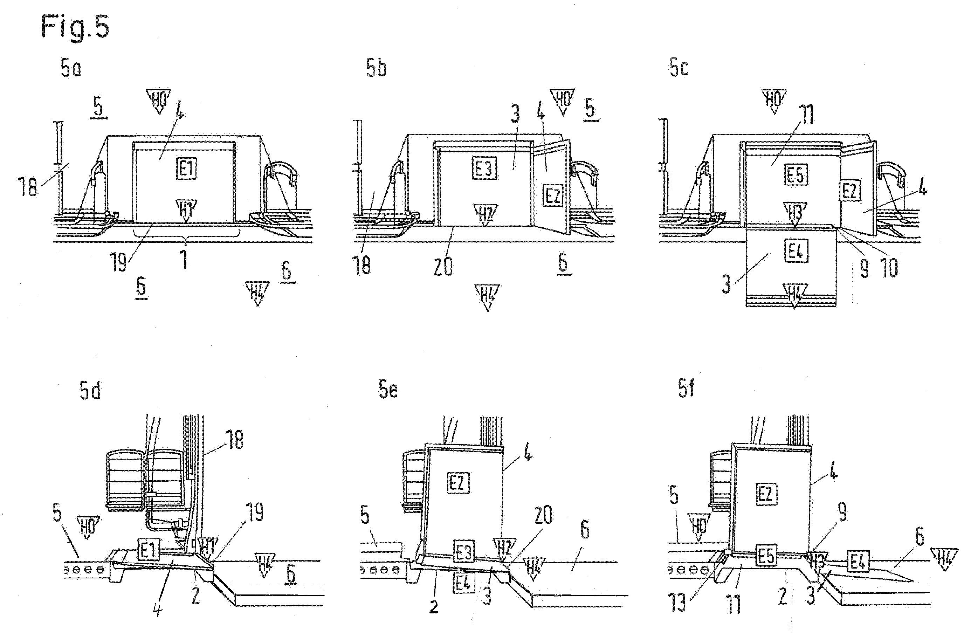

In den Figuren 4 und 5 sind der verstaute Zustand, der erste und die zweite Ausklappzustand nacheinander aus verschiedenen Perspektiven dargestellt.

Die verschiedenen Höhenniveaus und Ebenen sind in den Zeichnungen gezeigt. Durch das aufeinanderfolgende Ausklappen verschiedener Ebenen wird die Einstiegshöhe sukzessive abgesenkt.

In Figur 4a-c ist das Fahrzeug 18 schräg seitlich gezeigt. Dadurch ist eine Ansicht von schräg vorne auf die erfindungsgemäße Vorrichtung 1 dargestellt.

Figur 4a zeigt die Vorrichtung 1 in dem verstauten Zustand. Der Bodendeckel 4 ist geschlossen, und der Bodenbelag 7 des Bodendeckels schließt höhenversatzfrei mit dem Fußbodenbelag 8 des Fahrzeugbodens 5 ab.

In Figur 4b ist der erste Ausklappzustand dargestellt. Der Bodendeckel 4 ist um die erste Drehachse A in einem ersten Winkel alpha (α) aufgeklappt. Darunter wird die Klapprampe 3 in ihrem verstauten Zustand sichtbar.

### Figur 4c zeigt den zweiten Ausklappzustand

Der Bodendeckel 4 verbleibt in der bereits ausgeklappten Stellung.

Die Klapprampe 3 ist um eine zweite Drehachse B in einem zweiten Winkel beta (β) ausgeklappt.

Der Verstaufachboden 11 mit seinem Vorderrand 10 wird sichtbar und bildet mit der Klapprampe 3 mit ihrem abgeschrägten Außenrand 12 die Auffahrtsfläche.

Figur 4d-f zeigt das Fahrzeug 18 seitlich. Die erfindungsgemäße Vorrichtung ist daher in der Vorderansicht abgebildet.

In Figur 4d ist die Vorrichtung 1 in verstautem Zustand dargestellt. Der Bodendeckel 4 ist in dem Verstaufach 2 verstaut.

Der Fahrzeugboden 5 mit der Höhe H0 ist dargestellt.

Figur 4e zeigt den ersten Ausklappzustand aus dieser Perspektive mit ausgeklappten Bodendeckel 4 und in dem Verstaufach 2 verstauter Klapprampe 3.

Figur 4f stellt den zweiten Ausklappzustand mit ausgeklapptem Bodendeckel 4, ausgeklappter Klapprampe 3 und sichtbarem Verstaufachboden 11 dar.

In Figur 5a-c ist eine Draufsicht auf die erfindungsgemäße Vorrichtung 1 im Fahrzeug 18 in allen drei Zuständen gezeigt.

Figur 5a stellt den verstauten Zustand dar. Der Fahrzeugboden hat das größte Höhenniveau H0, dessen Höhenunterschied zum Höhenniveau H4 auf der Verkehrsfläche 6 mit der erfindungsgemäßen Vorrichtung überwunden werden soll.

Der Bodendeckel 4 ist eingeklappt und bildet eine Ebene E1, die zum Einstiegsbereich hin geneigt ist, so dass sich eine weitere, etwas niedrigere Höhe H1 am Vorderrand des Einstiegsbereichs in verstautem Zustand 19 ergibt.

Alternativ kann die Ebene E1 des Bodendeckels 4 ebenso waagrecht ausgeführt sein wie der Fahrzeugboden 5. In diesem Fall ist die Höhe H0 des Fahrzeugbodens gleich der Höhe H1 am Vorderrand des Einstiegsbereiches.

Figur 5b zeigt den ersten Ausklappzustand.

Bei ausgeklapptem Bodendeckel 4 ist dessen Innenseite sichtbar, die eine zweite Ebene E2 darstellt.

Eine dritte Ebene E3 auf der Oberseite der noch verstauten Klapprampe hat ein geringeres Höhenniveau als die Ebene E1 des Bodendeckels 4.

Auch die Ebene E3 ist zum Einstiegsbereich des Fahrzeugs 18 geneigt und bildet einen Vorderrand des Einstiegsbereichs in dem ersten Ausklappzustand 20 mit einer Höhe H2, welche zwischen der Höhe H1 am Vorderrand 19 des Einstiegsbereichs in verstautem Zustand und H4 der Verkehrsfläche 6 liegt.

Ein weiteres Ausklappen der erfindungsgemäßen Vorrichtung führt zum zweiten Ausklappzustand, wie in Fig. 5c dargestellt.

Hier bildet der Verstaufachboden 11 eine Ebene E5 die zum Einstiegsbereich des Fahrzeugs 18 geneigt ist, wobei der Vorderrand 10 an die Einstiegskante 9 mit einem Höhenniveau H3 angrenzt, welches kleiner als das Höhenniveau H2 ist. So ist die Höhe des Einstiegs sukzessive verringert worden.

Die Oberseite der Klapprampe 3 in ausgeklappter Form bildet eine Ebene E4, die die Einstiegskante 9 mit der Höhe H3 mit der Verkehrsfläche 6 mit der Höhe H4 verbindet.

Figuren 5d-f zeigen die drei Zustände der erfindungsgemäßen Vorrichtung in der Seitenansicht. Die geneigte Lage des Verstaufachs 2 im Fahrzeug 18 ist gut sichtbar.

Ebenso ist der Höhenunterschied des Vorderrands 19 des Einstiegsbereiches in verstautem Zustand mit der Höhe H1 zur Verkehrsfläche 6 mit der Höhe H4 und zum Fahrzeugboden 5 mit der Höhe H0 gut sichtbar.

In Figur 5e ist der erste Ausklappzustand mit aufgeklappten Bodendeckel 4 und verstauter Klapprampe 3 gezeigt. Es sind die Ebenen E2 auf der Unterseite des Bodendeckels 4, die Ebene E3 auf der Oberseite der Klapprampe 3 in verstautem Zustand und die Ebene E4 auf der Unterseite der Klapprampe 3 in verstautem Zustand dargestellt, wobei die Ebene E4 niedriger liegt als E3 und E3 niedriger als E2.

Der Höhenunterschied des Vorderrandes des Einstiegsbereichs in dem ersten Ausklappzustand 20 zum Höhenunterschied der Verkehrsfläche 6 (H2 zu H4) ist ersichtlich.

Figur 5f zeigt den zweiten Ausklappzustand. Hier bildet die Ebenen E4 der Klapprampe 3 in deren ausgeklappten Zustand einen Teil der Auffahrtsfläche und die Verbindung der Einstiegskante 9 mit der Höhe H3 und der Verkehrsfläche 6 mit der Höhe H4.

Der restliche Höhenunterschied zur Höhe H0 am Fahrzeugboden wird durch die Ebene E5 des Verstaufachbodens 11 mit dem abgeschrägten Hinterrand 13 überwunden.

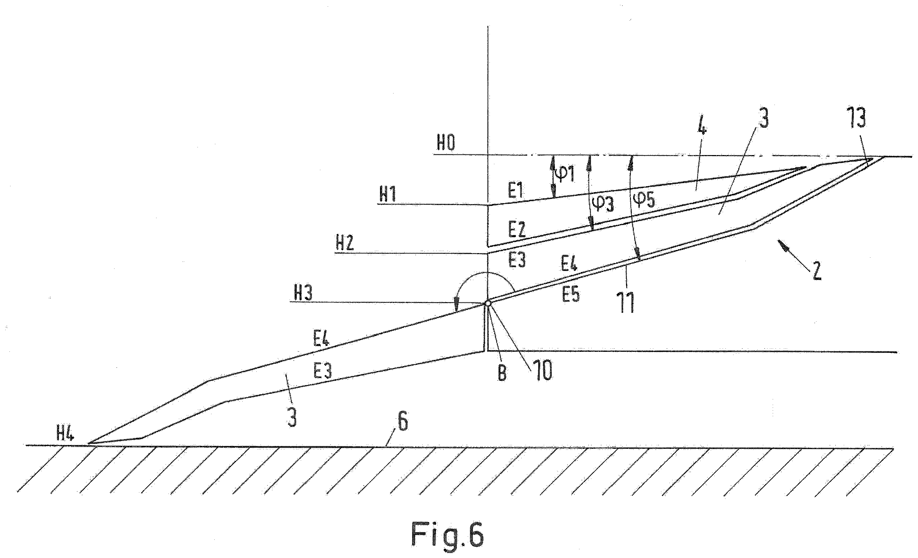

Die Fig. 6 zeigt eine Ausführungsform, in der Bodendeckel 4 im verstauten Zustand eine in Richtung eines Hinterrands 13 des Verstaufachbodens 11 sich verringernde Dicke aufweist und in der die Klapprampe 3 im verstauten Zustand eine in Richtung eines Hinterrands 13 des Verstaufachbodens 11 sich verringernde Dicke aufweist.

Durch die sich verringernde Dicke weisen sowohl der Bodendeckel 4 als auch die Klapprampe 3 im jeweils eingeklappten Zustand auf der Seite des Vorderrandes 10 des Verstaufachbodens eine größere Dicke auf als auf der Seite des Hinterrands 13 des Verstaufachbodens 11. Es ist hierdurch möglich, die Höhe H3 besonders weit abzusenken, weiter als dies bei gleichbleibender Dicke des Bodendeckels 4 bzw. der Klapprampe 3 möglich wäre. Bei gleichbleibender Dicke des Bodendeckels 4 und der Klapprampe 3 läge die Höhe H3 näher an der Höhe H0. Der Vorteil einer geringeren Höhe H3 kann auch erzielt werden, wenn nur die Klapprampe 3 oder nur der Bodendeckel 4 eine sich verringernde Dicke aufweisen.
Bei der Ausführungsform nach Fig. 6 ergeben sich verschiedene Winkel zwischen verschiedenen Ebenen und einer Horizontalebene auf der Höhe H0. Die Ebene E1 bezeichnet die Oberflächenebene des Bodendeckels 4. Die Ebene E2 bildet die Unterseite des Bodendeckels 4. Die Ebene E3 bildet die Oberseite der Klapprampe 3 im verstauten Zustand bzw. die Unterseite der Klapprampe 3 im zweiten Ausklappzustand, wenn die Klapprampe 3 auf der Höhe H4 aufliegt, was in Fig. 6 ebenfalls gezeigt ist. Die Ebene E4 bildet die Unterseite der Klapprampe 3 im verstauten Zustand bzw. die Oberseite der Klapprampe 3 im zweiten Ausklappzustand. Die Ebene E5 ist die Ebene des Verstaufachbodens 11. Der Winkel ϕ1 ist der Winkel zwischen der Ebene E1 und einer Horizontalen auf der Höhe H0 im verstauten Zustand. Der Winkel ϕ3 ist der Winkel zwischen der Ebene E3 und der Horizontale auf der Höhe H0. Der Winkel ϕ5 ist der Winkel zwischen der Ebene E5 und der Horizontale auf der Höhe H0, jeweils im verstauten Zustand. Durch die veränderliche Dicke der Klapprampe 3 und des Bodendeckels 4 ergibt sich folgende Beziehung zwischen den Winkeln: ϕ1 < ϕ3 < ϕ5. Entsprechend ist die Neigung der Ebene E1 kleiner als die Neigung der Ebene E3 und die Neigung der Ebene E3 ist kleiner als die Neigung der Ebene E5.

### Bezugszeichenliste

- 1: Vorrichtung (zur Überwindung von Höhenunterschieden)
- 2: Verstaufach
- 3: Klapprampe
- 4: Bodendeckel
- 5: Fahrzeugboden (Boden)
- 6: Verkehrsfläche
- 7: Bodenbelag
- 8: Fußbodenbelag (des Fahrzeugs)
- 9: Einstiegskante
- 10: Vorderrand (des Verstaufachbodens)
- 11: Verstaufachboden
- 12: Außenrand (der Klapprampe)
- 13: Hinterrand (des Verstaufachbodens)
- 14: Auflagefläche
- 15: Rand (des Bodendeckels)
- 16: Fahrzeugstruktur
- 17: Schienenoberkante
- 18: Fahrzeug
- 19: Vorderrand des Einstiegsbereichs in verstautem Zustand
- 20: Vorderrand des Einstiegsbereichs in erstem Ausklappzustand

- A: erste Drehachse
- B: zweite Drehachse
- C: Fahrzeuglängsachse

- E1: Ebene
- E2: Ebene
- E3: Ebene
- E4: Ebene
- E5: Ebene

- H0: Höhe
- H1: Höhe
- H2: Höhe
- H3: Höhe
- H4: Höhe

- ϕ1: Winkel
- ϕ3: Winkel
- ϕ5: Winkel

- α: erster Winkel
- β: zweiter Winkel

## Patentansprüche

1. Vorrichtung (1) zur Überwindung von Höhenunterschieden zwischen einem ersten niedrigeren Höhenniveau und einem zweiten, höheren Höhenniveau, insbesondere beim Einstieg in Fahrzeuge (18) oder Betreten von baulichen Einrichtungen, wobei die Vorrichtung durch mechanische Klappbewegung von einem verstauten Zustand in einen ersten Ausklappzustand, in einen zweiten Ausklappzustand und wieder zurückführbar ist, umfassend
- ein Verstaufach (2), aufweisend einen Verstaufachboden (11) mit einem Vorderrand (10),
- eine Klapprampe (3) und
- einen ein- oder mehrteiligen Bodendeckel (4),
wobei die Vorrichtung (1) dergestalt in einem Bereich des zweiten Höhenniveaus angrenzend zu einem Boden (5) auf dem zweiten Höhenniveau anordnenbar oder angeordnet ist, dass der Vorderrand (10) des Verstaufachbodens (11) tiefer als das zweite Höhenniveau liegt,
- in dem verstauten Zustand der Bodendeckel (4) auf dem zweiten Höhenniveau liegt, und die Klapprampe (3) unterhalb des Bodendeckels (4) in dem Verstaufach (2) verstaut ist,
- der Bodendeckel (4) im Fall eines einteiligen Bodendeckels an einem Seitenrand des Verstaufachs (2) schwenkbar angelenkt ist und daher um eine erste Drehachse A schwenkbar ist, die quer zu dem Vorderrand (10) des Verstaufachbodens ist, oder im Fall eines mehrteiligen Bodendeckels mehrere Teile des Bodendeckels an einem Seitenrand des Verstaufachs (2) schwenkbar angelenkt sind und daher jeweils um verschiedene erste Drehachsen schwenkbar sind, die quer zu dem Vorderrand (10) des Verstaufachbodens (11) sind,
- die Klapprampe (3) um eine zweite, zum Vorderrand (10) des Verstaufachbodens (11) parallele Drehachse B schwenkbar an dem Vorderrand (10) des Verstaufachbodens (11) angelenkt ist, und
- der erste Ausklappzustand im Fall des einteiligen Bodendeckels durch ein Ausklappen des Bodendeckels (4) um die erste Drehachse A einstellbar ist, oder im Fall des mehrteiligen Bodendeckels durch Ausklappen des Bodendeckels (4) um die ersten Drehachsen einstellbar ist,
- der zweite Ausklappzustand durch ein Ausklappen der Klapprampe (3) um die zweite Drehachse B einstellbar ist und
- in dem zweiten Ausklappzustand die Klapprampe (3) auf das erste Höhenniveau auflegbar ist, sodass die Klapprampe (3) und der Verstaufachboden (11) zusammen eine geneigte Fläche bilden.

2. Vorrichtung (1) nach Anspruch 1, **dadurch gekennzeichnet, dass** in dem zweiten Ausklappzustand das zweite Höhenniveau durch die Vorrichtung (1) dergestalt mit dem ersten Höhenniveau verbindbar ist, dass eine Höhe (H0) des zweiten Höhenniveaus, die Höhe (H3) des Vorderrands (10) des Verstaufachbodens (11) und die Höhe (H4) des ersten Höhenniveaus in folgender Beziehung stehen: H0 > H3 > H4.

3. Vorrichtung (1) nach einem der vorangegangenen Ansprüche, **dadurch gekennzeichnet, dass** der Verstaufachboden (11) in Einstiegsrichtung schräg nach oben auf die Höhe (H0) des zweiten Höhenniveaus ausläuft.

4. Vorrichtung (1) nach einem oder mehreren der vorangegangenen Ansprüche, **dadurch gekennzeichnet, dass** die Klapprampe (3) an einem Außenrand (12), der auf das erste Höhenniveau auflegbar ist, abgeschrägt ist.

5. Vorrichtung (1) nach Anspruch 4, wobei der abgeschrägte Außenrand (12) der Klapprampe (3) in dem verstauten Zustand an einem schräg auslaufenden Hinterrand (13) des Verstaufachbodens (11) passgenau anliegt.

6. Vorrichtung (1) nach einem oder mehreren der vorangegangenen Ansprüche, **dadurch gekennzeichnet, dass** der Bodendeckel (4) an einem Rand (15), der in dem verstauten Zustand zu einem Hinterrand (13) des Verstaufachbodens (11) hin orientiert ist, abgeschrägt ist.

7. Vorrichtung (1) nach Anspruch 6, wobei der Rand (15) des Bodendeckels (4) in dem verstauten Zustand an dem abgeschrägten Außenrand (12) der Klapprampe (3) passgenau anliegt.

8. Vorrichtung (1) nach einem oder mehreren der vorangehenden Ansprüche, **dadurch gekennzeichnet, dass** der Bodendeckel (4) einen Bodenbelag (7) aufweist.

9. Vorrichtung (1) nach einem oder mehreren der vorangegangenen Ansprüche, **dadurch gekennzeichnet, dass** der Bodendeckel (4) und die Klapprampe (3) an Scharnieren schwenkbar gelagert sind.

10. Vorrichtung (1) nach einem oder mehreren der vorangegangenen Ansprüche, **dadurch gekennzeichnet, dass** der Verstaufachboden (11) mit rutschhemmendem Material belegt oder beschichtet ist oder rutschhemmend ausgestaltet ist.

11. Vorrichtung (1) nach einem oder mehreren der vorangegangenen Ansprüche, **dadurch gekennzeichnet, dass** der Bodendeckel (4) im verstauten Zustand eine in Richtung eines Hinterrands (13) des Verstaufachbodens (11) sich verringernde Dicke aufweist.

12. Vorrichtung (1) nach einem oder mehreren der vorangegangenen Ansprüche, **dadurch gekennzeichnet, dass** die Klapprampe (3) im verstauten Zustand eine in Richtung eines Hinterrands (13) des Verstaufachbodens (11) sich verringernde Dicke aufweist.

13. Vorrichtung (1) nach einem oder mehreren der vorangegangenen Ansprüche, **dadurch gekennzeichnet, dass** die Klapprampe (3) derart ausgeformt ist, dass sie in dem verstauten Zustand den Bodendeckel (4) aufnimmt, sodass aus der Klapprampe (3) und dem im verstauten Zustand befindlichen Bodendeckel (4) eine gemeinsame Oberfläche gebildet wird.

14. Fahrzeug (18), insbesondere Schienenfahrzeug, aufweisend eine Vorrichtung (1) nach einem oder mehreren der Ansprüche 1- 13.

## Claims

1. A device (1) for overcoming height differences between a first lower height level and a second higher height level, in particular when boarding vehicles (18) or entering structures, the device being transferrable from a stowed state into a first folded-out state, into a second folded-out state, and back, by a mechanical folding movement, comprising:
- a stowage compartment (2), comprising a stowage compartment bottom (11) including a front edge (10);
- a folding ramp (3); and
- a one- or multi-piece floor lid (4),
the device (1) being disposable, or disposed, in a region of the second height level, adjoining a floor (5) on the second height level in such a way that the front edge (10) of the stowage compartment bottom (11) is located lower than the second height level,
- in the stowed state, the floor lid (4) being located at the second height level, and the folding ramp (3) being stowed beneath the floor lid (4) in the stowage compartment (2),
- the floor lid (4), in the case of a one-piece floor lid, being pivotably hinged at a side edge of the stowage compartment (2), and thus being pivotable about a first rotational axis A, which is transverse to the front edge (10) of the stowage compartment bottom, or, in the case of a multi-piece floor lid, multiple pieces of the floor lid being pivotably hinged at a side edge of the stowage compartment (2), and thus each being pivotable about different first rotational axes, which are transverse to the front edge (10) of the stowage compartment bottom (11);
- the folding ramp (3) being hinged at the front edge (10) of the stowage compartment bottom (11) so as to be pivotable about a second rotational axis B that is parallel to the front edge (10) of the stowage compartment bottom (11); and
- the first folded-out state, in the case of the one-piece floor lid, being adjustable by folding out the floor lid (4) about the first rotational axis A, or, in the case of the multi-piece floor lid, being adjustable by folding out the floor lid (4) about the first rotational axes;
- the second folded-out state being adjustable by folding out the folding ramp (3) about the second rotational axis B; and
- in the second folded-out state, the folding ramp (3) being placeable onto the first height level, so that the folding ramp (3) and the stowage compartment bottom (11) together form a sloped surface.

2. The device (1) according to claim 1, **characterized in that**, in the second folded-out state, the second height level can be connected by the device (1) to the first height level in such a way that a height (H0) of the second height level, the height (H3) of the front edge (10) of the stowage compartment bottom (11), and the height (H4) of the first height level have the following relationship with respect to one another: H0 > H3 > H4.

3. A device (1) according to any one of the preceding claims, **characterized in that** the stowage compartment bottom (11), in the entering direction, tapers obliquely upwardly toward the height (H0) of the second height level.

4. A device (1) according to any one or more of the preceding claims, **characterized in that** the folding ramp (3) is beveled at an outer edge (12), which can be placed onto the first height level.

5. The device (1) according to claim 4, wherein the beveled outer edge (12) of the folding ramp (3), in the stowed state, rests with precise fit against an obliquely tapering rear edge (13) of the stowage compartment bottom (11).

6. A device (1) according to any one or more of the preceding claims, **characterized in that** the floor lid (4) is beveled at an edge (15) that, in the stowed state, is oriented toward a rear edge (13) of the stowage compartment bottom (11).

7. The device (1) according to claim 6, wherein the edge (15) of the floor lid (4), in the stowed state, rests with precise fit against the beveled outer edge (12) of the folding ramp (3).

8. A device (1) according to any one or more of the preceding claims, **characterized in that** the floor lid (4) comprises a floor covering (7).

9. A device (1) according to any one or more of the preceding claims, **characterized in that** the floor lid (4) and the folding ramp (3) are pivotably mounted at hinges.

10. A device (1) according to any one or more of the preceding claims, **characterized in that** the stowage compartment bottom (11) is covered or coated with a non-skid material or has a non-skid design.

11. A device (1) according to any one or more of the preceding claims, **characterized in that** the floor lid (4), in the stowed state, has a decreasing thickness in the direction of a rear edge (13) of the stowage compartment bottom (11).

12. A device (1) according to any one or more of the preceding claims, **characterized in that** the folding ramp (3), in the stowed state, has a decreasing thickness in the direction of a rear edge (13) of the stowage compartment bottom (11).

13. A device (1) according to any one or more of the preceding claims, **characterized in that** the folding ramp (3) is configured so as to receive the floor lid (4) in the stowed state, so that the folding ramp (3) and the floor lid (4), in the stowed state, form a joint surface.

14. A vehicle (18), in particular a rail vehicle, comprising a device (1) according to any one or more of claims 1 to 13.

## Revendications

1. Dispositif (1) pour franchir des différences de hauteur entre un premier niveau de hauteur plus bas et un second niveau de hauteur plus haut, en particulier lors de la montée dans des véhicules (18) ou la pénétration dans des dispositifs structurels, dans lequel le dispositif peut être ramené par un mouvement de basculement mécanique d'un état rangé à un premier état déployé, à un second état déployé et inversement, comprenant
- un compartiment de rangement (2) présentant un fond de compartiment de rangement (11) avec un bord avant (10),
- une rampe escamotable (3) et
- un couvercle de fond (4) en une ou plusieurs parties, dans lequel le dispositif (1) peut être ou est agencé dans une zone du second niveau de hauteur de manière contiguë à un fond (5) au second niveau de hauteur de telle manière que le bord avant (10) du fond de compartiment de rangement (11) se trouve plus profond que le second niveau de hauteur,
- dans l'état rangé le couvercle de fond (4) se trouve au second niveau de hauteur, et la rampe escamotable (3) est rangée en dessous du couvercle de fond (4) dans le compartiment de rangement (2),
- le couvercle de fond (4) est articulé de manière pivotante à un bord latéral du compartiment de rangement (2) dans le cas d'un couvercle de fond d'un seul tenant et par conséquent est pivotant autour d'un premier axe de rotation A qui est transversal au bord avant (10) du fond de compartiment de rangement, ou dans le cas d'un couvercle de fond en plusieurs parties, plusieurs parties du couvercle de fond sont articulées de manière pivotante à un bord latéral du compartiment de rangement (2) et sont par conséquent respectivement pivotantes autour de différents premiers axes de rotation qui sont transversaux au bord avant (10) du fond de compartiment de rangement (11),
- la rampe escamotable (3) est articulée au bord avant (10) du fond de compartiment de rangement (11) de manière pivotante autour d'un second axe de rotation B parallèle au bord avant (10) du fond de compartiment de rangement (11), et
- le premier état déployé est réglable dans le cas du couvercle de fond d'un seul tenant par un déploiement du couvercle de fond (4) autour du premier axe de rotation A, ou est réglable dans le cas du couvercle de fond en plusieurs parties par déploiement du couvercle de fond (4) autour des premiers axes de rotation,
- le second état déployé est réglable par un déploiement de la rampe escamotable (3) autour du second axe de rotation B et
- dans le second état déployé la rampe escamotable (3) peut être placée au premier niveau de hauteur de sorte que la rampe escamotable (3) et le fond de compartiment de rangement (11) forment ensemble une surface inclinée.

2. Dispositif (1) selon la revendication 1, **caractérisé en ce que** dans le second état déployé le second niveau de hauteur peut être relié par le dispositif (1) au premier niveau de hauteur de telle manière qu'une hauteur (H0) du second niveau de hauteur, la hauteur (H3) du bord avant (10) du fond de compartiment de rangement (11) et la hauteur (H4) du premier niveau de hauteur soient en relation suivante : H0 > H3 > H4.

3. Dispositif (1) selon l'une des revendications précédentes, **caractérisé en ce que** le fond de compartiment de rangement (11) se termine dans le sens d'entrée en biais vers le haut à la hauteur (H0) du second niveau de hauteur.

4. Dispositif (1) selon l'une ou plusieurs des revendications précédentes, **caractérisé en ce que** la rampe escamotable (3) est chanfreinée au niveau d'un bord extérieur (12) qui peut être placé au premier niveau de hauteur.

5. Dispositif (1) selon la revendication 4, dans lequel le bord extérieur biseauté (12) de la rampe escamotable (3) dans l'état rangé repose en ajustement précis contre un bord arrière (13) se terminant en biais du fond de compartiment de rangement (11).

6. Dispositif (1) selon l'une ou plusieurs des revendications précédentes, **caractérisé en ce que** le couvercle de fond (4) est chanfreiné au niveau d'un bord (15) qui est orienté dans l'état rangé vers un bord arrière (13) du fond de compartiment de rangement (11).

7. Dispositif (1) selon la revendication 6, dans lequel le bord (15) du couvercle de fond (4) dans l'état rangé repose en ajustage précis contre le bord extérieur (12) chanfreiné de la rampe escamotable (3).

8. Dispositif (1) selon l'une ou plusieurs des revendications précédentes, **caractérisé en ce que** le couvercle de fond (4) présente un revêtement de fond (7).

9. Dispositif (1) selon l'une ou plusieurs des revendications précédentes, **caractérisé en ce que** le couvercle de fond (4) et la rampe escamotable (3) sont logés de manière pivotante au niveau de charnières.

10. Dispositif (1) selon l'une ou plusieurs des revendications précédentes, **caractérisé en ce que** le fond de compartiment de rangement (11) est occupé ou revêtu avec du matériau antidérapant ou est configuré de manière antidérapante.

11. Dispositif (1) selon l'une ou plusieurs des revendications précédentes, **caractérisé en ce que** le couvercle de fond (4) dans l'état rangé présente une épaisseur diminuant en direction d'un bord arrière (13) du fond de compartiment de rangement (11).

12. Dispositif (1) selon l'une ou plusieurs des revendications précédentes, **caractérisé en ce que** la rampe escamotable (3) dans l'état rangé présente une épaisseur diminuant en direction d'un bord arrière (13) du fond de compartiment de rangement (11).

13. Dispositif (1) selon l'une ou plusieurs des revendications précédentes, **caractérisé en ce que** la rampe escamotable (3) est formée de telle manière qu'elle reçoive dans l'état rangé le couvercle de fond (4) de sorte qu'une surface commune soit formée à partir de la rampe escamotable (3) et du couvercle de fond (4) se trouvant dans l'état rangé.

14. Véhicule (18), en particulier véhicule ferroviaire, présentant un dispositif (1) selon l'une ou plusieurs des revendications 1 à 13.
